(19) Europäisches Patentamt
European Patent Office
Office européen des brevets

(11) **EP 1 789 722 B1**

(12) **FASCICULE DE BREVET EUROPEEN**

(45) Date de publication et mention de la délivrance du brevet:
**27.04.2011 Bulletin 2011/17**

(21) Numéro de dépôt: **05726337.8**

(22) Date de dépôt: **08.09.2005**

(51) Int Cl.:
***B60K 6/20*** (2007.10)

(86) Numéro de dépôt international:
**PCT/FR2005/050723**

(87) Numéro de publication internationale:
**WO 2006/030150 (23.03.2006 Gazette 2006/12)**

(54) **DISPOSITIF DE TRANSMISSION DE PUISSANCE POUR VEHICULE AUTOMOBILE ET PROCEDE D'UTILISATION DE CE DISPOSITIF**

ANTRIEBSEINHEIT FÜR EIN HYBRIDFAHRZEUG UND VERFAHREN

POWER TRANSMISSION DEVICE FOR A MOTOR VEHICLE AND METHOD FOR USING SAID DEVICE

(84) Etats contractants désignés:
**AT BE BG CH CY CZ DE DK EE ES FI FR GB GR HU IE IS IT LI LT LU MC NL PL PT RO SE SI SK TR**

(30) Priorité: **15.09.2004 FR 0452051**

(43) Date de publication de la demande:
**30.05.2007 Bulletin 2007/22**

(73) Titulaire: **Peugeot Citroën Automobiles SA**
**78140 Vélizy-Villacoublay (FR)**

(72) Inventeur: **LAEUFFER, Jacques**
**75007 Paris (FR)**

(56) Documents cités:
**EP-A- 0 780 256        EP-A- 1 097 830**
**DE-A1- 19 606 771      FR-A- 2 783 764**
**US-A- 4 019 586        US-A- 5 571 058**
**US-A- 6 161 640**

## Description

La présente invention concerne un dispositif de transmission de puissance pour véhicule automobile. L'invention a notamment pour but de supprimer des ruptures ou effacements de couple pouvant apparaître lors de changements de régimes de conduite. L'invention trouve une application particulièrement avantageuse, dans le domaine des véhicules automobiles mais elle pourrait aussi être utilisée avec d'autres types de véhicules, tels que des motocyclettes ou des bateaux.

On connaît des organes de transmission pour véhicules hybrides qui comportent un moteur thermique, un, deux, ou plusieurs trains épicycloïdaux et deux machines électriques. Un exemple d'un tel organe est décrit dans la demande de brevet français FR-A-2832357. Avec ces organes de transmission, la puissance du moteur thermique peut être soit transmise directement aux roues, soit dérivée en passant par une chaîne électrique. La chaîne électrique comporte les machines électriques susceptibles de se comporter en moteur ou en générateur selon des valeurs d'énergies reçues électriquement et ou mécaniquement respectivement sur leurs bornes et leur arbre. La puissance dérivée est retransmise aux roues du véhicule ou stockée le cas échéant dans un système de stockage. Cette puissance dérivée permet d'adapter précisément le couple appliqué aux roues du véhicule à celui demandé par un conducteur tout en adaptant également précisément les couple et régime du moteur thermique de façon à optimiser son rendement. Cette adaptation du couple appliqué aux roues procure un meilleur confort de conduite, tandis que l'adaptation du point de fonctionnement du moteur thermique permet une économie d'énergie.

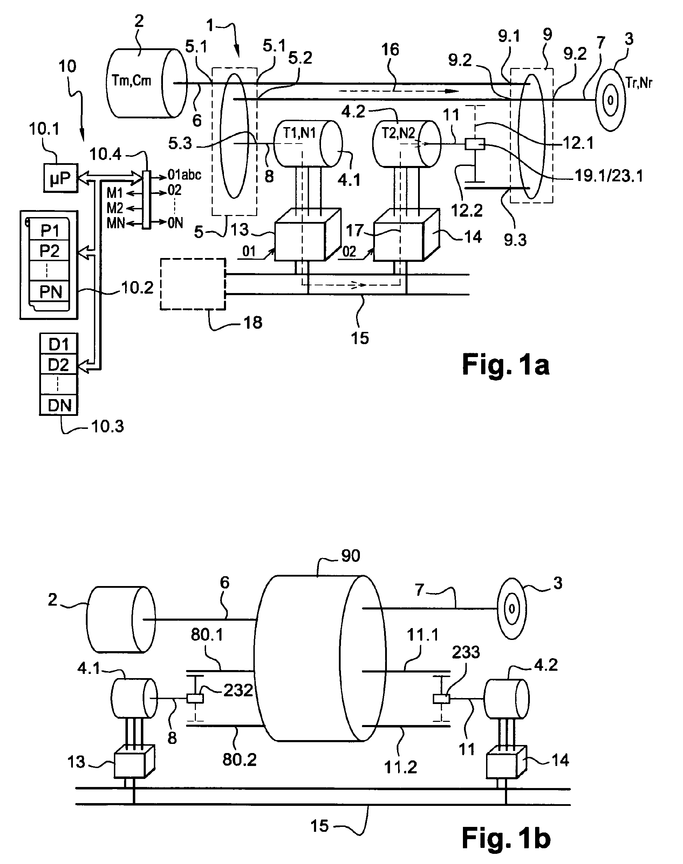

La figure 1a montre ainsi un exemple d'un organe 1 de transmission de puissance entre un moteur 2 thermique et des roues 3 de véhicule. Cet organe 1 comporte une première machine 4.1 électrique et une deuxième machine 4.2 électrique, ainsi qu'un premier train 5 épicycloïdal et un deuxième train 9 épicycloïdal. Les trains 5 et 6 épicycloïdaux comportent chacun un premier, un deuxième et un troisième élément. Un élément de ces trains peut être soit un planétaire, soit un porte-satellites, soit une couronne. Ces trois éléments engrènent mutuellement. En variante, chaque train comporte plus de trois éléments. Par exemple, chaque train pourrait comporter une couronne à denture extérieure qui engrènerait avec un quatrième élément. Dans un autre exemple, un train épicycloïdal pourrait comporter plusieurs portes-satellites.

Un premier élément 5.1 du premier train 5 est relié au moteur 2 thermique et à un premier élément 9.1 du deuxième train 9. Un deuxième élément 5.2 du premier train 5 est relié à un deuxième élément 9.2 du deuxième train 9 qui est en prise directe avec l'arbre 7 des roues 3. Un troisième élément 5.3 du premier train 5 est relié à un arbre 8 de la première machine 4.1. Comme on va le voir, un arbre 11 de la deuxième machine 4.2 est accroché soit à ce deuxième élément 9.2 de train dans un premier mode de fonctionnement du véhicule, soit à un troisième élément 9.3 du deuxième train 9 dans un deuxième mode de fonctionnement du véhicule. Un dispositif 23.1 de commutation assure le passage d'un accrochage de l'arbre 11 avec le deuxième élément 9.2, à un accrochage de l'arbre 11 avec le troisième élément 9.3, et réciproquement.

La figure 1b montre de façon plus générale un organe 1 de transmission de puissance entre un moteur 2 thermique et des roues 3 de véhicule. Cet organe 1 comporte une première machine 4.1 électrique et une deuxième machine 4.2 électrique, ainsi qu'un ensemble 90 mécanique comportant au moins deux trains épicycloïdaux. Dans un exemple, cet ensemble 90 mécanique comporte notamment n trains épicycloïdaux. Dans certaines réalisations, les trains épicycloïdaux peuvent être reliés entre eux par l'intermédiaire d'arbres d'engrenages et de pignons.

Comme on va le voir, un arbre 8 de la première machine 4.1 est accroché soit à un élément 80.1 de l'ensemble 90 mécanique dans un mode de fonctionnement du véhicule, soit à un autre élément 80.2 de l'ensemble mécanique 90 dans un autre mode de fonctionnement du véhicule. Un premier dispositif 232 de commutation assure le passage d'un accrochage de l'arbre 8 avec l'élément 80.1, à un accrochage de l'arbre 8 avec l'élément 80.2, et réciproquement.

Comme on va le voir également, un arbre 11 de la deuxième machine 4.2 est accroché soit à un élément 12.1 de l'ensemble 90 mécanique dans un mode de fonctionnement du véhicule, soit à un autre élément 12.2 de l'ensemble mécanique 90 dans un autre mode de fonctionnement du véhicule. Un deuxième dispositif 233 de commutation assure le passage d'un accrochage de l'arbre 11 avec l'élément 11.1, à un accrochage de l'arbre 11 avec l'élément 11.2, et réciproquement.

Dans le cas général, n'importe quel arbre du dispositif 1 de transmission peut passer d'un accrochage d'un élément à un autre de l'ensemble 90, par l'intermédiaire d'un dispositif de commutation. En effet, dans le cas général, l'arbre 8 ou 11 d'une des machines 4.2 ou 4.2, l'arbre 6 de moteur 2, ou l'arbre 7 de roues 3 sont susceptibles d'être reliés à différents éléments de l'ensemble 90 mécanique. A chaque fois qu'un nouveau dispositif de commutation est introduit dans l'ensemble 90, deux nouveaux modes de fonctionnement sont introduits. Pour m dispositifs de commutation utilisés, on dispose donc de $2^m$ modes de fonctionnement différents. Seul les plus intéressants d'un point de vue énergétique seront conservés pour faire fonctionner le dispositif 1 de transmission.

Dans le cas où on passe par un système à courant continu, deux onduleurs 13 et 14 relient respectivement la première et la deuxième machine 4.1, 4.2 à un bus 15 de tension continue. Ainsi la puissance issue du moteur 2 thermique peut être transmise directement aux roues suivant une chaîne 16 mécanique comportant notamment les trains 5 et 9 épicycloïdaux. Mais cette puissance peut également être transmise aux roues 3 du véhicule suivant une chaîne 17 électrique comportant les machines 4.1 et 4.2 et les onduleurs 13 et 14. Ces machines 4.1 et 4.2 peuvent alors fonctionner soit en moteur, soit en générateur.

Pour un fonctionnement moteur d'une des machines, les onduleurs 13 et 14 assurent la transformation d'un signal de tension continu observable sur le bus 15 en signaux de tension alternatifs alimentant des bobines de la machine. Pour un fonctionnement en générateur d'une des machines, les onduleurs 13 et 14 assurent la transformation des signaux de tension alternatifs observables sur les phases de la machine en un signal de tension continu. Dans les cas où on ne fait pas appel à un système de stockage d'énergie, lorsqu'une des machines 4.1 ou 4.2 fonctionne en moteur, l'autre machine fonctionne en générateur. En effet, la somme des puissances consommée ou fournie par les machines 4.1 et 4.2 doit être égale à zéro. Cette égalité n'est valable que dans le cas où l'organe 1 ne comporte pas de système de stockage d'énergie.

En variante, un système 18 de stockage d'énergie, tel qu'une batterie, est relié au bus 15 de tension continue. La puissance qui est dérivée vers les machines 4.1 et 4.2 peut être transmise à ce système 18. Ce système 18 de stockage autorise des degrés de fonctionnement supplémentaires. A cet effet, les machines 4.1 et 4.2 électriques peuvent soit fonctionner toutes les deux en moteur, soit fonctionner toutes les deux en générateur. En particulier, dans une phase de ralentissement du véhicule, une des machines 4.1 ou 4.2 au moins se comporte en générateur afin de transmettre de la puissance au système 18 de stockage.

Dans une réalisation particulière, les machines 4.1 et 4.2 sont des machines de type synchrone. Ces machines présentent l'intérêt d'être compactes et d'avoir un bon rendement.

Un tel organe 1 de transmission permet d'obtenir une multitude de rapports de transmission et de limiter la consommation du moteur 2 thermique. A cet effet, à puissance donnée, on limite la vitesse de rotation du moteur 2 thermique. En adaptant des vitesses de rotation des machines électriques, tous les rapports de transmission peuvent être appliqués entre le moteur 2 thermique et les roues 3. En outre, un tel organe ne comporte pas d'embrayage dissipant de l'énergie. La consommation du moteur 2 est ainsi réduite d'environ quarante pour-cent par rapport à une consommation de ce même moteur 2 utilisé avec une boîte de vitesse classique.

Pour limiter encore davantage une consommation du moteur 2 et en particulier pour limiter une énergie dissipée par la chaîne 17 électrique, l'organe 1 de transmission passe du premier au deuxième mode de fonctionnement, et réciproquement. Ces deux modes ont plus précisément pour objet de limiter la puissance dissipée par la deuxième machine 4.2, en limitant sa vitesse de rotation.

A cette fin, dans le cas de la figure 1a, lorsque la vitesse de rotation de l'arbre 7 des roues 3 est inférieure à celle de l'arbre 6 du moteur 2, l'organe 1 passe au premier mode de fonctionnement. L'arbre 11 de la deuxième machine 4.2 est alors relié au deuxième élément 9.2 du deuxième train 9 par l'intermédiaire d'un premier engrenage 12.1. Ce premier mode de fonctionnement correspond à des rapports de vitesse courts.

Lorsque la vitesse de rotation de l'arbre 6 du moteur est inférieure à la vitesse de rotation de l'arbre 7 des roues 3, l'organe 1 passe au deuxième mode de fonctionnement. L'arbre 11 de la deuxième machine 4.2 est alors relié au troisième élément 9.3 du deuxième train 9 par l'intermédiaire d'un deuxième engrenage 12.2. Ce deuxième mode de fonctionnement correspond à des rapports de transmission longs.

Dans les deux modes de fonctionnement, les machines 4.1 et 4.2 peuvent se comporter soit en moteur, soit en générateur.

Dans le cas de la figure 1a comme dans le cas de la figure 1b, on définit Nm, Nr, N1 et N2 comme étant respectivement des vitesses de rotation réduites de l'arbre 6 du moteur 2, de l'arbre 7 des roues 3, de l'arbre 8 de la première machine 4.1 et de l'arbre 11 de la deuxième machine 4.2. Ces vitesses sont des vitesses de rotation réduites car elles correspondent aux vitesses de rotation réelles multipliées par des coefficients constants.

On définit Tm, Tr, T1 et T2 comme étant des couples réduits appliqués respectivement sur l'arbre 6 du moteur 2, sur l'arbre 7 des roues 3, sur l'arbre 8 de la première machine 4.1 et sur l'arbre 11 de la deuxième machine 4.2. Ces couples sont des couples réduits car ils correspondent aux couples réels multipliés par des coefficients constants.

De manière générale, pour une transmission à dérivation de puissance à deux modes de fonctionnement, on peut établir les équations suivantes:

$$Nr = Nm + N1 \quad (1)$$

$$Tr = Tm + T2 \quad (2)$$

Dans le premier mode de fonctionnement, on peut établir les équations suivantes :

$$Nr = N2 \qquad (3)$$

$$Tm = T1 \qquad (4)$$

Dans le deuxième mode de fonctionnement, on peut établir les équations suivantes :

$$Nr=N2+G.N1 \qquad (5)$$

$$Tm=T1-G.T2 \qquad (6)$$

G étant un coefficient constant correspondant à des raisons des trains et à des rapports d'engrenages du dispositif de transmission.

A la commutation d'un mode à un autre, on peut établir les équations suivantes :

$$N1=0 \qquad (7)$$

$$Nm=Nr=N2 \qquad (8)$$

et

$$T2=0 \qquad (9)$$

$$Tm=Tr=T1 \qquad (10)$$

Pour plus de simplicité, on appellera, couple, le couple réduit et, vitesse de rotation, la vitesse de rotation réduite dans la suite du document.

Pour effectuer une commutation d'un mode à un autre, il est préférable de n'appliquer aucun couple sur les engrenages 12.1 et 12.2 afin d'éviter des accoups de couple à la roue et de minimiser le dimensionnement des organes de commutation mécanique. La puissance d'une machine électrique est égale par définition à son couple multiplié par sa vitesse de rotation. La première machine 4.1 possède donc une vitesse N1 de rotation nulle lors de la commutation, comme nous l'indique l'équation (7). Aucune puissance n'est alors dissipée dans la chaîne 17 électrique et la puissance dissipée par la deuxième machine 4.2 est donc nulle. Comme cette deuxième machine 4.2 possède une vitesse de rotation non nulle, le couple T2 qui est appliqué sur son arbre est nul. Une commutation peut alors se produire dans de bonnes conditions.

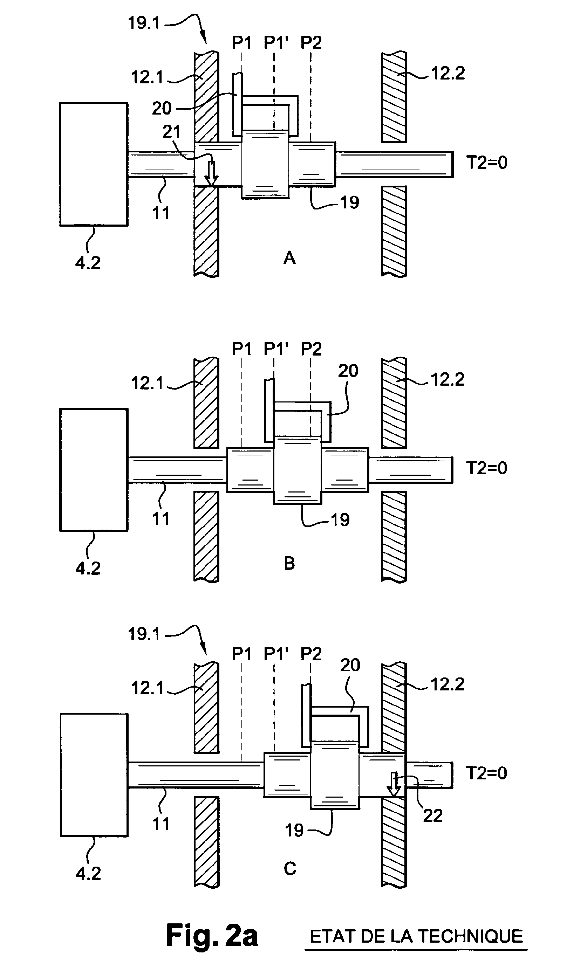

La figure 2a montre des étapes de commutation d'un mode à un autre réalisées avec un dispositif 19.1 de commutation de l'état de la technique. Au cours de ces étapes, le dispositif 19.1 de commutation commute du premier au deuxième mode de fonctionnement. Ainsi, sur cette figure, l'arbre 11 de la deuxième machine 4.2 passe d'un accrochage avec l'engrenage 12.1 à un accrochage avec l'engrenage 12.2.

Ce dispositif de commutation 19.1 comporte un crabot 19 et une fourchette 20. Le crabot 19 peut se déplacer en translation le long de l'arbre 11. La fourchette 20 permet de déplacer ce crabot 19 d'une première position P1 vers une deuxième position P2 et réciproquement. A cet effet, la fourchette 20 prend appui sur deux épaulements du crabot 19.

Comme on l'a vu, lors de cette commutation, la première machine 4.1 possède une vitesse N1 de rotation nulle, de manière à ce que le couple T2 appliqué sur l'arbre 11 de la machine 2 soit nul.

Dans une première étape A, le crabot 19 se trouve dans une première position P1. Le crabot 19 coopère alors avec le premier engrenage 12.1 relié au deuxième élément 9.2 du deuxième train 9. Ce crabot 19 est alors en appui sur cet engrenage 12.1.

Dans une deuxième étape B, la fourchette 20 déplace le crabot 19 dans une position P1' intermédiaire. Lors de ce déplacement, le crabot 19 se dégage du premier engrenage 12.1. Ce déplacement se réalise sans problème puisque aucun couple T2 ne s'exerce sur l'arbre 11. A la fin de cette deuxième étape B, le crabot 19 est dégagé des deux engrenages 12.1 et 12.2.

Enfin, dans une troisième étape C, la fourchette 20 déplace le crabot 19 dans une deuxième position P2. Lors de ce déplacement, le crabot 19 s'engage à l'intérieur du deuxième engrenage 12.2. Cet engagement du crabot 19 se fait là encore sans effort, puisque le couple appliqué sur l'arbre 11 est nul. Le crabot 19 est alors en prise avec ce deuxième engrenage 12.2.

Le déplacement du crabot 19 est rendu possible par le fait que les rapports d'engrenages utilisés dans l'organe 1 de transmission et les raisons des trains 5 et 9 épicycloïdaux sont choisis afin d'assurer un synchronisme entre les vitesses de rotation de l'arbre 11 et des engrenages 12.1 et 12.2. Plus précisément, ces rapports et ces raisons sont choisis, de manière à ce que la vitesse de rotation de l'arbre 11 soit égale à la vitesse de rotation du premier et du deuxième engrenage 12.1, 12.2, lorsque la vitesse de rotation de la première machine 4.1 est nulle.

Toutefois, dans la pratique, cette commutation ne se produit pas réellement à couple nul. En effet, pendant cette commutation, il est nécessaire de produire une puissance dans la chaîne 17 électrique correspondant au moins à des pertes d'énergie des deux machines 4.1 et 4.2. La première machine 4.1 électrique ne peut pas fournir cette puissance puisqu'elle se trouve à l'arrêt. Donc seule la deuxième machine 4.2 peut fournir ces pertes d'énergies. Dans la première et la troisième étape A et C, des couples 21 et 22 faibles peuvent être appliqués sur l'arbre 11. Ces couples 21 et 22 permettent à la deuxième machine 4.2 qui est en rotation de produire une puissance correspondant aux pertes des machines 4.1 et 4.2.

En revanche, dans la deuxième étape B, aucun couple ne peut être appliqué sur l'arbre 11 de la deuxième machine 4.2. En effet, durant cette deuxième étape, le crabot 20 n'est entraîné ni par le premier, ni par le deuxième engrenage 12.1, 12.2. Cette absence d'entraînement peut engendrer un ralentissement des machines. La deuxième machine 4.2 reste peu de temps en rotation en raison de son inertie. En effet, cette rotation entraîne des variations de flux et donc un passage de courant dans ses bobines. Ce passage de courant engendre notamment des pertes joules non négligeables qui finalement ralentissent notablement la machine.

Par ailleurs, dans le cas où le système 18 de stockage est relié au bus 15 et où la deuxième machine 4.2 fonctionne en générateur, une rupture de couple peut se produire lors de la commutation. Cette rupture de couple peut se produire pendant la deuxième étape B où l'arbre 11 de la deuxième machine 4.2 n'est plus en prise avec les engrenages 12.1 et 12.2. En effet, lorsque la deuxième machine 4.2 fonctionne en générateur, un couple non négligeable est appliqué sur son arbre 11. L'équation (1) indique que le couple Tr appliqué sur l'arbre 7 des roues correspond à la somme du couple Tm appliqué sur l'arbre 6 du moteur 2 thermique et du couple C2 appliqué sur l'arbre 11 de la deuxième machine 4.2. Pour un couple Tm constant appliqué sur l'arbre 6 du moteur 2 thermique, une commutation entraînerait donc une rupture de couple désagréable pour le conducteur du véhicule. Des dispositifs de transmission de puissance similaires sont connus du document EP 1 097 830.

L'invention se propose de résoudre notamment ce problème de production de puissance correspondant aux pertes des machines lors d'une commutation, ainsi que ce problème de rupture de couple.

A cette fin, dans l'invention, on utilise un crabot qui permet une commutation progressive entre une première position où l'arbre de la deuxième machine est en prise avec l'arbre des roues et une deuxième position où l'arbre de la deuxième machine est en prise avec un élément du deuxième train épicycloïdal. Notamment, pendant cette commutation, le crabot assure à un moment donné une liaison simultanée entre l'arbre de la deuxième machine, l'arbre de roue, et un élément du deuxième train épicycloïdal. Dans l'invention, les efforts sur l'arbre de la deuxième machine sont répartis de manière à ce que le passage d'un mode à un autre se fasse dans les meilleures conditions possibles.

Ainsi, il y a toujours un couple appliqué sur l'arbre de la deuxième machine. Cette application d'un couple permet de produire une puissance correspondant aux pertes des machines et d'assurer une conduite fluide et confortable, sans rupture de couple.

La présente invention concerne donc un dispositif de transmission de puissance entre un moteur thermique et des roues d'un véhicule automobile, conforme à l'objet de la revendication 1.

Selon un autre aspect, ce dispositif comportant

- une première et une deuxième machine électrique, et
- un ensemble mécanique reliant entre eux un arbre du moteur, un arbre des roues, et des arbres des machines électriques, cet ensemble mécanique comportant

- au moins deux trains épicycloïdaux, chaque train épicycloïdal comportant plusieurs éléments mutuellement engrenés avec des arbres d'engrenage, et
- au moins un dispositif de commutation assurant, par déplacement, une liaison sélective d'un des arbres à un premier élément ou un deuxième élément de l'ensemble mécanique auxquels est susceptible d'être relié cet arbre,
- le dispositif de commutation comporte des moyens pour assurer simultanément une liaison entre l'arbre lié sélectivement et les deux éléments de l'ensemble mécanique, pendant un déplacement de ce dispositif de commutation.

Selon un autre aspect, l'invention concerne un procédé d'utilisation d'un dispositif de transmission de puissance entre un moteur thermique et des roues d'un véhicule automobile, ce dispositif de transmission de puissance comportant une première et une deuxième machine électrique, un dispositif de commutation, et un ensemble mécanique reliant entre eux un arbre du moteur, un arbre des roues, et des arbres des machines électriques, cet ensemble mécanique comportant au moins deux trains épicycloïdaux, chaque train comportant plusieurs éléments mutuellement engrenés avec des arbres d'engrenage, dans lequel,

- dans un premier mode de fonctionnement, on relie un arbre d'une machine à un élément de l'ensemble mécanique, à l'aide d'un crabot du dispositif de commutation, et
- dans un deuxième mode de fonctionnement, on relie l'arbre de cette même machine à un autre élément de l'ensemble mécanique à l'aide du crabot,
- si la machine ne fonctionne pas en moteur pendant le passage d'un mode à un autre, on applique un couple sur l'arbre de l'autre machine pour compenser la présence d'un couple parasite sur cet arbre.

L'invention sera mieux comprise à la lecture de la description qui suit et à l'examen des figures qui l'accompagnent. Ces figures sont données à titre illustratif mais nullement limitatif de l'invention. Ces figures montrent :

- figure 1a (déjà décrite en partie) : une représentation schématique d'un organe de transmission de puissance ;
- figure 1b (déjà décrite en partie) : une représentation schématique d'un organe de transmission de puissance plus général ;
- figure 2a (déjà décrite) : une représentation schématique d'étapes de commutation d'un mode à un autre avec un dispositif de commutation suivant l'état de la technique ;
- figures 2b-2c : des représentations schématiques d'étapes de commutation d'un mode à un autre avec des dispositifs de commutation suivant l'invention ;

- figures 3a-3b : des vues de côté et de face d'un dispositif de commutation selon l'invention ;
- figure 4 : une représentation schématique d'une chaîne électrique selon l'invention et de ses signaux de commande, lors d'une commutation entre deux modes, lorsqu'une des machines fonctionne en générateur ;
- figure 5 : une représentation schématique d'une chaîne mécanique d'un dispositif de transmission de puissance selon l'invention.

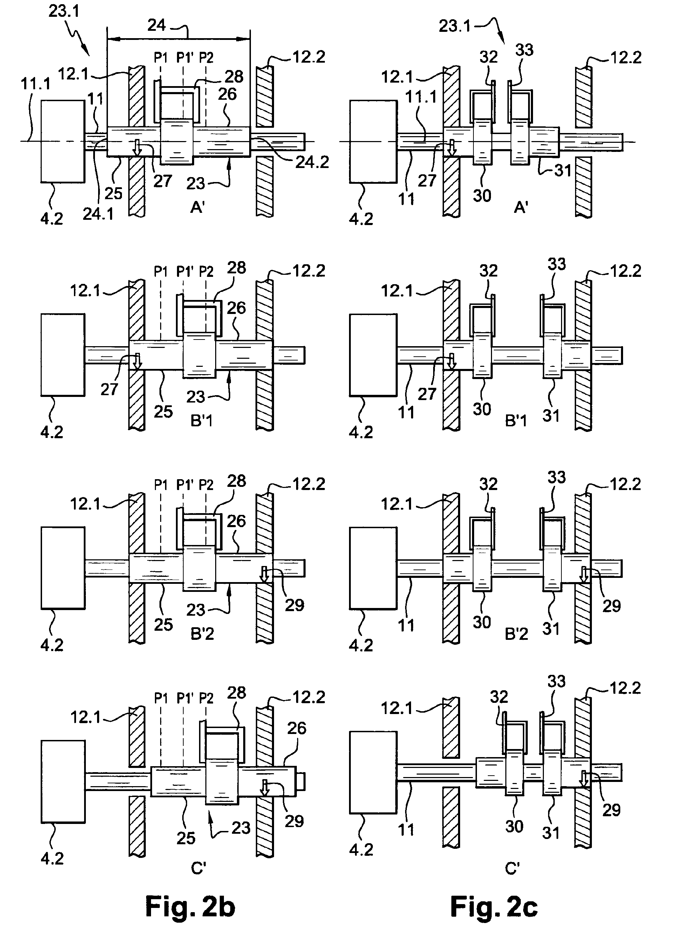

La figure 2b montre une représentation schématique d'étapes de commutation d'un mode à un autre avec un dispositif 23.1 de commutation selon l'invention. Ce dispositif 23.1 de commutation comporte un crabot 23 et une fourchette 28.

Le crabot 23 est un crabot monobloc. Ce crabot 23 est disposé entre le premier et le deuxième engrenage 12.1, 12.2. Comme précité, ces engrenages 12.1 et 12.2 engrènent respectivement avec un élément du deuxième train 9 en prise directe avec l'arbre 7 des roues 3 et avec un autre élément de ce deuxième train 9. Le crabot 23 est entraîné en rotation par l'arbre 11 et est mobile en translation le long de cet arbre 11. En variante, les engrenages 12.1 et 12.2 engrènent avec des éléments appartenant à deux trains différents.

Plus précisément, le crabot 23 comporte une première extrémité 25 et une deuxième extrémité 26. Ces extrémités 25 et 26 sont orientées axialement par rapport à des axes des engrenages 12.1 et 12.2. De préférence, un axe 11.1 de l'arbre 11 de la deuxième machine 4.2 est confondu avec les axes des deux engrenages 12.1 et 12.2, et du crabot 23. Le crabot 23 comporte une longueur 24 de navette qui s'étend entre ses deux extrémités radiales 24.1 et 24.2 les plus éloignées. Cette longueur 24 de navette est supérieure à la distance qui sépare les deux engrenages 12.1 et 12.2.

La fourchette 28 prend appui sur deux épaulements de ce crabot 23. Cette fourchette 28 est commandée pour déplacer le crabot 23 en translation le long de l'arbre 11. Cette fourchette 28 déplace le crabot 23 d'une première position P1 vers une deuxième position P2 en passant par des positions intermédiaires, notamment la position P'1.

Les conditions pour que cette communication se produise sont les mêmes que celles énoncées précédemment. Une de ces conditions correspond à une vitesse N1 de rotation nulle de la première machine 4.1. En outre, un synchronisme entre l'arbre 11 et les engrenages 12.1 et 12.2 doit être observé lors de la commutation. Ce synchronisme est vérifié lorsque la vitesse de rotation des engrenages 12.1 et 12.2 est égale à une vitesse de rotation de l'arbre 11.

Dans une première étape A', la fourchette 28 se trouve dans la première position P1. La première extrémité 25 du crabot 23 est alors en prise avec le premier engrenage 12.1 relié à un élément du deuxième train 9. Cette première extrémité 25 s'étend au-delà du premier engrenage 12.1. La deuxième extrémité 26 du crabot 23 n'est en prise avec aucun des engrenages 12.1 et 12.2. Un couple 27 est appliqué sur l'arbre 12.1 pour que la deuxième machine 4.2 puisse fournir une puissance correspondant notamment aux pertes des machines 4.1 et 4.2.

Dans une deuxième étape B'1, la fourchette 28 déplace le crabot 23 dans une position intermédiaire P1'. Lors de ce déplacement, le crabot 23 entre en coopération avec le deuxième engrenage 12.2 sans effort puisque le crabot 23 est en appui sur le premier engrenage 12.1. Dans cette deuxième étape B'1, le crabot 23 n'est pas en appui sur le deuxième engrenage 12.2. La deuxième extrémité 26 du crabot 23 a pu pénétrer à l'intérieur de l'engrenage 12.2 en profitant des jeux qui existent entre cette extrémité 26 et l'engrenage 12.2. A la fin de la deuxième étape B'1, les deux extrémités 25 et 26 du crabot 23 entrent donc en coopération avec les deux engrenages 12.1 et 12.2 simultanément. Et seule la première extrémité est en appui sur le premier engrenage 12.1.

Dans une troisième étape B'2, la fourchette 28 se trouve toujours dans la position intermédiaire P1'. Les extrémités 25 et 26 du crabot 23 entrent toujours en coopération avec le premier et le deuxième engrenage 12.1, 12.2. Dans cette étape B'2 l'appui du crabot 23 est transféré d'un engrenage vers un autre. En effet, dans cette troisième étape B'2, la deuxième extrémité 26 est en appui sur le deuxième engrenage 12.2, tandis que la première extrémité 25 n'est plus en appui sur le premier engrenage 12.1.

Ce transfert d'appui peut s'effectuer en déplaçant légèrement le crabot 23 en rotation 1 à l'aide d'un actionneur (non représenté). Plus précisément, en déplaçant le crabot 23 des jeux angulaires existant entre lui et les engrenages 12.1 et 12.2, on déplace l'appui de ce crabot 23 d'un engrenage à l'autre. Ce transfert d'appui est réalisé de préférence lorsque le crabot 23 se trouve globalement à mi-chemin entre le premier et le deuxième engrenage 12.1, 12.2

Dans une quatrième étape C', la première extrémité 25 du crabot 23 se dégage facilement du premier engrenage 12.1, puisque cette extrémité 25 n'est plus en appui sur le premier engrenage 12.1. La deuxième extrémité 26 est alors seule en prise avec le deuxième engrenage 12.2 relié à un élément du deuxième train 9 épicycloïdal. Un couple 29 est alors appliqué sur l'arbre 11 par l'intermédiaire du deuxième engrenage 12.1. Ainsi, on a remplacé l'étape B de l'étape de la technique par deux étapes B'1 et B'2. Lors de ces étapes B'1 et B'2, le crabot 23 est en prise avec les deux engrenages 12.1 et 12.2 simultanément et transfère son appui sur l'arbre 11 d'un engrenage à l'autre.

En conséquence, dans toutes les étapes de la commutation, un couple est appliqué sur l'arbre 11 de la deuxième machine 4.2 par l'intermédiaire du crabot 23. La deuxième machine 4.2 peut ainsi toujours produire une puissance correspondant aux pertes des machines 4.1 et 4.2. En outre, le couple appliqué sur l'arbre 11 de la deuxième machine 4.2, lorsque cette dernière se comporte en générateur, peut toujours être appliqué à l'arbre 7 des roues 3 du véhicule. En effet, ce couple est appliqué par l'intermédiaire du premier ou du deuxième engrenage 12.1, 12.2

Comme représenté sur la figure 1, le dispositif de transmission de puissance selon l'invention comporte en outre un dispositif 10 de pilotage. Ce dispositif 10 de pilotage comporte un microprocesseur 10.1, une mémoire 10.2 programme et une mémoire 10.3 de données. La mémoire 10.2 programme comporte des programmes P1-PN et la mémoire 10.3 de données comportent des données D1-DN. Le dispositif de pilotage 10 comporte aussi une interface 10.4 d'entrées-sorties. Cette interface 10.4 d'entrées-sorties reçoit des signaux M1-MN issus de capteurs (non représentés) et émet notamment des signaux de commande 01-02 à destination des machines 4.1, 4.2. Des sorties de capteurs mesurant la vitesse de rotation et le couple des machines 4.1, 4.2 sont notamment reliées à des entrées de l'interface 10.4.

Le déplacement de la fourchette 28 est par exemple réalisé par l'intermédiaire d'un moteur à courant continu de faible puissance (non représenté). Lorsque le dispositif 10 de pilotage détecte des valeurs de vitesse et de couple correspondant à des conditions de commutation, le microprocesseur 10.1 peut exécuter un programme P1. En exécution de ce programme P1, le dispositif 10 de pilotage émet un signal 03 à destination du moteur à courant continu pendant la commutation d'un mode à l'autre. Ce signal 03 commande la rotation de ce moteur.

De préférence, le crabot 23 se déplace de manière continue, c'est à dire que pendant toute la commutation, le crabot 23 est toujours en mouvement.

La commutation est bien entendu réversible, le crabot 23 pouvant se déplacer du deuxième engrenage 12.2 vers le premier engrenage 12.1.

La figure 2c montre une variante de réalisation du dispositif 23.1 de commutation selon l'invention. Contrairement au crabot de la figure 2b qui est réalisé en une seule partie, dans cette variante, le crabot 23 comporte une première partie 30 et une deuxième partie 31. Ces deux parties 30 et 31 sont disposées dans l'espace séparant les deux engrenages 12.1 et 12.2 et sont orientées de manière axiale par rapport à un axe de l'arbre 11 de la deuxième machine 4.2.

Ces deux parties 30 et 31 sont entraînées en rotation par l'arbre 11. Ces deux parties 30 et 31 peuvent se déplacer indépendamment l'une de l'autre, en translation le long de l'arbre 11 de la deuxième machine 4.2. Chacune des parties 30 et 31 est entraînée en translation par une fourchette 32, 33. Les fourchettes 32, 33 assurent le déplacement d'une partie du crabot 23 d'une position engagée vers une position dégagée, et réciproquement. Dans la position engagée, la partie du crabot 23 est engagée à l'intérieur d'un engrenage qui lui correspond. Dans la position dégagée, la partie est dégagée de l'engrenage qui lui correspond.

Ainsi, dans la première étape A', la première partie 30 est dans une position engagée, tandis que la deuxième partie 31 se trouve dans une position dégagée. Le couple 27 est alors appliqué sur l'arbre 11 par l'intermédiaire de cette première partie 30.

Dans la deuxième étape B'1, la deuxième partie 31 s'engage sans effort dans le deuxième engrenage 12.2, puisque aucun couple n'est appliqué sur cette deuxième partie 31. En effet, le couple 27 est toujours appliqué sur l'arbre 11 de la deuxième machine 4.2 par l'intermédiaire de la première partie 30. Les extrémités des deux parties 30 et 31 orientées radialement par rapport à l'axe 11.1 sont alors séparées d'une distance qui est supérieure à celle séparant les deux engrenages 12.1 et 12.2. Autrement dit, ces deux parties 30 et 31 peuvent se déplacer sur une distance supérieure à celle séparant les deux engrenages 12.1 et 12.2.

Dans une troisième étape B'2, en jouant là encore sur des écarts angulaires qui existent entre les parties 30 et 31 du crabot 23 et les engrenages 12.1 et 12.2, on transfère un appui du crabot 23 sur l'arbre 11 de la première vers la deuxième partie. Le couple 29 est alors appliqué sur l'arbre 11 par l'intermédiaire de la deuxième partie 31. Pour transférer le couple, on fait entrer en rotation les parties 30 et 31 du crabot 23 de quelques dixièmes de degrés, à l'aide d'un actionneur. Cet actionneur peut notamment être formé des machines 4.1 et ou 4.2. qui reçoivent alors un ajustement dans leurs commandes.

Dans une quatrième étape C', la première partie 30 se dégage du premier engrenage 12.1. La deuxième partie 31 est alors en prise avec le deuxième engrenage 12.2, tandis que la première partie 30 n'est plus en prise avec le premier engrenage 12.1. Ce dégagement de la première partie 31 a pu se faire sans aucun effort, puisque l'arbre 11 prend appui sur la deuxième partie 31.

Comme l'arbre 11 est toujours entraîné par un des deux engrenages 12.1, 12.2, une puissance correspondant aux pertes des machines 4.1 et 4.2 peut toujours être produite par la deuxième machine 4.2. Et, dans le cas où la deuxième machine 4.2 fonctionne en mode générateur lors de la commutation, un couple de cette deuxième machine 4.2 est appliqué de manière continue sur l'arbre 7 des roues du véhicule.

Les deux parties 30 et 31 étant distinctes l'une de l'autre, le crabot 23 est très facile à déplacer d'une étape à une autre. En effet, dans cette réalisation, on déplace des parties du crabot 23 qui ne sont jamais en appui avec un des engrenages 12.1 ou 12.2. Dans cette réalisation, aucun effort n'est exercé sur les parties déplacées.

Les fourchettes 32 et 33 peuvent là encore être entraînées par des moteurs à courant continu commandés par le dispositif 10 de pilotage. En variante, une seule des fourchettes 32, 33 seulement est entraînée par un moteur. L'autre fourchette lui est alors reliée.

Bien entendu, dans cette réalisation aussi, la commutation est réversible. En effet, le crabot 23 peut passer d'un accrochage avec le deuxième engrenage 12.2 à un accrochage avec le premier engrenage 12.1.

En variante, les deux parties 30 et 31 du crabot 23 se situent à l'extérieur de l'espace séparant les deux engrenages 12.1 et 12.2.

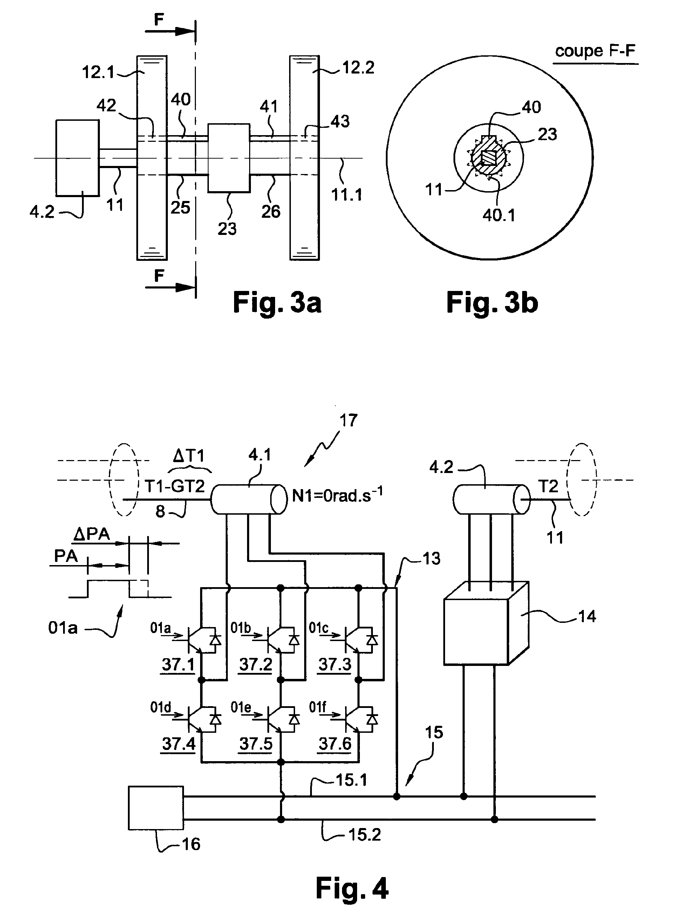

La figure 3a montre notamment une vue de côté d'un crabot 23 monobloc selon l'invention. De préférence, ce crabot 23 comporte des languettes 40 et 41 qui s'étendent respectivement sur toute la longueur des extrémités 25 et 26. Ces languettes 40 et 41 sont orientées de manière axiale par rapport à l'axe 11.1 de l'arbre 11.

Les engrenages 12.1 et 12.2 comportent des rainures 42 et 43 qui s'étendent suivant un axe de ces engrenages 12.1, 12.2. De préférence, cet axe est confondu avec l'axe 11.1. Les rainures 42 et 43 s'étendent sur toute une épaisseur de ces engrenages, sur une périphérie de trous de ces engrenages 12.1 et 12.2. Ces rainures 42 et 43 dont la forme est complémentaire de celle des languettes 40 et 41 sont destinées à recevoir ces languettes 40 et 41. Ainsi, lorsque le crabot 23 s'engage à l'intérieur d'un des engrenages 12.1 ou 12.2, le crabot 23 entraîne cet engrenage en rotation.

Lorsque le crabot 23 est réalisé en deux parties 30 et 31, chaque partie comporte une languette destinée à coulisser dans la rainure de l'engrenage qui lui correspond. Chacune des parties 30 et 31 peut alors entraîner l'engrenage qui lui correspond en rotation.

La figure 3b montre une vue en coupe F.F du crabot 23 selon l'invention. Dans une réalisation particulière, l'arbre 11 possède une forme rectangulaire. Cet arbre 11 entre alors en coopération avec une cavité du crabot 23 de forme rectangulaire. Ainsi, le crabot 23 est susceptible de se déplacer en translation le long de cet arbre 11 et d'être entraîné en rotation par cet arbre 11.

En variante, outre les languettes 40 et 41, le crabot 23 comporte des dents 40.1 dont la forme est complémentaire de celle des trous des engrenages 12.1 et 12.2. En variante, le crabot 23 ne comporte que des dents.

La figure 4 montre une chaîne 17 électrique d'un dispositif de transmission selon l'invention. L'onduleur 13 de la deuxième machine 4.2 est commandé de manière à compenser un couple parasite appliqué sur l'arbre 8 de la première machine 4.1. Comme on va le voir, ce couple parasite est observable lorsque la deuxième machine 4.2 fonctionne en générateur au moment d'une commutation d'un mode à un autre. Pendant cette commutation, la deuxième machine 4.2 fournit de l'énergie au système 18 de stockage relié au bus 15.

Plus précisément, l'onduleur 13 comporte six interrupteurs 37.1-37.6. Chaque interrupteur 37.1-37.6 est formé d'un transistor, par exemple de type IGBT, et d'une diode. Pour hacher une tension, les interrupteurs 37.1 37.6 peuvent par exemple être fermés deux à deux. Par exemple, lorsque le premier transistor 37.1 est passant, le cinquième transistor 37.5 est lui aussi passant. Un courant peut alors s'établir en passant par une connexion 15.1 positive du bus 15, puis par le premier interrupteur 37.1, puis par une phase de la première machine 4.1 reliée entre les interrupteurs 37.1 et 37.4, puis par des bobines de la première machine 4.1, puis par une deuxième phase de la première machine 4.1 reliée entre les interrupteurs 37.2 et 37.5, puis par le cinquième interrupteur 37.5, pour ensuite retourner à une connexion négative du bus 15.

Les diodes des interrupteurs 37.1-37.6 assurent notamment un rôle de diodes de roues libres lorsque l'onduleur 13 fonctionne en hacheur et que la première machine 4.1 se comporte en moteur. Ces diodes forment également un pont de diodes redressant un signal de tension alternative délivrée par la première machine 4.1, lorsque cette dernière se comporte en générateur.

Lorsque la deuxième machine 4.2 fournit de l'énergie électrique au système 18 de stockage, un couple T2 est appliqué sur l'arbre 11 de la deuxième machine 4.2.

Une partie de ce couple T2 est transmis à l'arbre de la première machine 4.1 par l'intermédiaire des éléments des trains 5 et 9 épicycloïdaux. Le couple T1 appliqué habituellement sur l'arbre de la première machine 4.1 au moment d'une commutation (voir équation 10) est alors substitué par un couple T1-GT2. Le couple de valeur -GT2, correspondant au couple parasite, pourrait engendrer un emballement de la première machine 4.1 au moment de cette commutation.

Un couple de compensation, de valeur +G.T2, doit donc être appliqué sur l'arbre 8 de la première machine 4.1, de manière à maintenir nulle sa vitesse de rotation pendant la commutation. Ce couple de compensation compense le couple parasite de valeur -GT2 appliqué sur l'arbre 8 de la première machine 4.1.

Pour appliquer ce couple +G.T2 de compensation, on peut allonger la durée des signaux de commande appliqués sur des bases des transistors des interrupteurs 37.1-37.6. Ces transistors modifient des courants qui traversent des bobines de la première machine 4.1. Et ces courants modifient le couple appliqué sur l'arbre 8 de la première machine 4.1. Dans un exemple, la durée PA des signaux de commande est allongée d'une durée ΔPA correspondant au couple G.T2.

Dans une réalisation, la mémoire 10.3 de données contient une donnée D1 correspondant au coefficient G. Le microprocesseur 10.1 peut donc acquérir à travers l'interface 10.4 un signal M2 correspondant à une valeur du couple T2 appliqué sur l'arbre 11 de la deuxième machine 4.2.

Ce signal M2 peut notamment être acquis à l'aide d'un capteur de couple disposé sur l'arbre de la deuxième machine 4.2. Le dispositif 10 de pilotage envoie des signaux 01a-01f de commande qui commandent la commutation des interrupteurs 37.1-37.6. Ces signaux 01a-01f permettent de compenser le couple appliqué sur l'arbre 8 de la première machine 4.1, en engendrant l'application d'un couple de valeur +GT2 sur cet arbre. Le microprocesseur 10.1 pourra ainsi calculer la durée ΔPA dont il faut allonger les signaux O1a-O1f pour qu'un couple de compensation de valeur +GT2 compense exactement le couple parasite engendré par la deuxième machine 4.2.

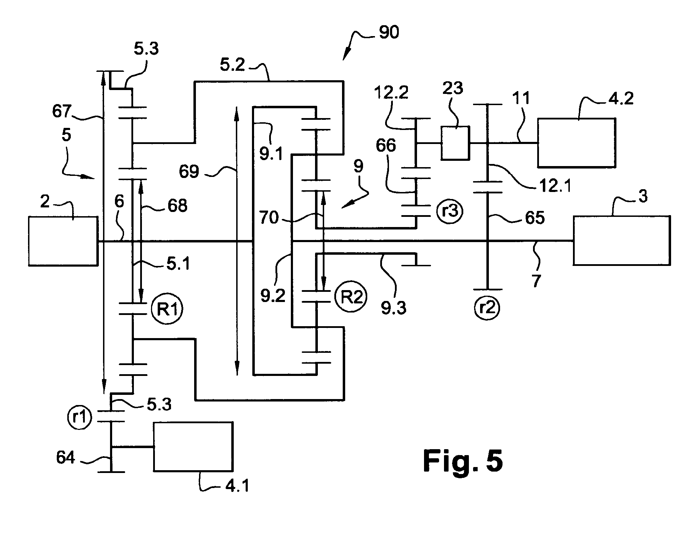

La figure 5 montre un exemple de réalisation d'un dispositif de transmission selon l'invention. Pour plus de clarté, le chemin 17 électrique reliant les deux machines 4.1 et 4.2 n'est pas représenté sur cette figure. Dans cette réalisation, l'ensemble 90 mécanique est formé des deux trains 5 et 9. Le premier élément 5.1 du premier train 5 correspond ici à un planétaire, le deuxième élément 5.2 du premier train 5 correspond à un porte-satellites et le troisième élément 5.3 du premier train 5 correspond à une couronne. Par ailleurs, le premier élément 9.1 du deuxième train 9 correspond à une couronne, le deuxième élément 9.2 du deuxième train 9 correspond à un porte-satellites, et le troisième éléments 9.3 du deuxième train 9 correspond à un planétaire.

Plus précisément, l'arbre 6 du moteur 2 thermique est relié au planétaire 5.1 du premier train 5. L'arbre 8 de la première machine 4.1 est relié à la couronne 5.3 du premier train 5 par l'intermédiaire d'une première roue 64.

Le porte-satellites 5.2 du premier train 5 est relié au porte-satellites 9.2 du deuxième train 9. Et le planétaire 5.1 du premier train 5 est relié à la couronne 9.1 du deuxième train 9. En reliant ainsi les deux trains 5 et 9, on limite le nombre de degrés de liberté de ces deux trains à quatre. On assure ainsi les mouvements en rotation des arbres des deux machines 4.1 et 4.2, de l'arbre 6 du moteur 2 et de l'arbre 7 des roues 3 les uns par rapport aux autres.

L'arbre 7 des roues 3 est relié directement au porte-satellites 9.3 du deuxième train 9. Cet arbre 7 est susceptible d'être relié au premier engrenage 12.1 par l'intermédiaire d'une deuxième roue 65. Le planétaire 9.3 du deuxième train 9 est susceptible d'être relié au deuxième engrenage 12.2 par l'intermédiaire d'une troisième roue 66.

Le crabot 23 selon l'invention est entraîné en rotation par l'arbre 11. Dans le premier mode de fonctionnement, le crabot 23 selon l'invention coopère avec le premier engrenage 12.1. Dans le deuxième mode de fonctionnement, le crabot 23 coopère avec le deuxième engrenage 12.2. Dans le premier mode de fonctionnement, l'arbre 11 de sortie de la deuxième machine 4.2 est donc relié au porte-satellites 9.2 du deuxième train 9 qui est en prise directe avec l'arbre 7 des roues 3. Dans le deuxième mode de fonctionnement, l'arbre 11 de sortie de la deuxième machine 4.2 est donc relié au planétaire 9.3 du deuxième train 9.

La raison d'un train épicycloïdal correspond à un rapport entre le diamètre de sa couronne et le diamètre de son planétaire. La raison R1 du premier train 5 correspond donc au rapport entre le diamètre 67 de la couronne 5.3 et le diamètre 68 du planétaire 5.1. La raison R2 du deuxième train 9 correspond donc au rapport entre le diamètre 69 de la couronne 9.1 et le diamètre 70 du planétaire 9.3. Un premier rapport r1 correspond à un rapport entre le diamètre de la roue 64 et le diamètre 67 de la couronne 5.3 du premier train 5. Un deuxième rapport r2 correspond à un rapport entre le diamètre du premier engrenage 12.1 et le diamètre de la roue 65. Un troisième rapport r3 correspond à un rapport entre la vitesse de rotation du deuxième engrenage 12.2 et la vitesse de rotation du planétaire 9.3 du deuxième train 9.

Dans un exemple de réalisation, la raison R1 du premier train 5 vaut 2.3 et la raison R2 du deuxième train 9 vaut 3.789. Le premier rapport r1 vaut alors -0,45. Le deuxième rapport r2 vaut -0,23. Et le troisième rapport r3 vaut +1,18. Le signe - indique que les roues tournent dans des sens opposés l'une de l'autre.

En variante, les arbres des machines 4.1 et 4.2, l'arbre 7 des roues 3 et l'arbre 6 du moteur 2 thermique sont reliés entre eux par l'intermédiaire d'autres éléments des trains 5 et 9, ou par l'intermédiaire de plus de deux trains. Une des contraintes imposées à l'ensemble 90 mécanique formé par les trains épicycloïdaux est de présenter quatre degrés de liberté, un pour chaque arbre.

## Revendications

1. Dispositif (1) de transmission de puissance entre un moteur (2) thermique et des roues (3) d'un véhicule automobile, ce dispositif (1) comportant :

     - une première et une deuxième machine électrique (4.1, 4.2), et
     - un ensemble (90) mécanique reliant entre eux un arbre (6) du moteur (2), un arbre (7) des roues (3), et des arbres (8, 11) des machines électriques (4.1, 4.2), cet ensemble (90) mécanique comportant

         - au moins deux trains (5, 9) épicycloïdaux, chaque train épicycloïdal comportant plusieurs éléments mutuellement engrenés avec des arbres d'engrenage, et
         - au moins un dispositif (23.1) de commutation assurant, par déplacement, une liaison sélective d'un arbre d'une des machines (4.1, 4.2) électrique à un premier élément (9.2) dans un premier mode de fonctionnement ou à un deuxième élément (9.3) de l'ensemble (90) mécanique dans un deuxième mode de fonctionnement,

     - le dispositif (23.1) de commutation comportant des moyens (23, 28) pour assurer simultanément une liaison entre d'une part, l'arbre qui est lié sélectivement au premier ou au deuxième élément, et d'autre part ce premier et ce deuxième éléments (9.2, 9.3), **caractérisé en ce que** :
     - les trains (5, 9) épicycloïdaux possèdent des raisons (R1, R2) choisies de manière que lorsque les vitesses de rotation des deux éléments (9.2, 9.3) sont égales, la vitesse de rotation de l'arbre (8) de l'autre machine (4.1) est nulle.
- la liaison simultanée est réalisée pendant une commutation entre les deux modes de fonctionnement.

2. Dispositif selon la revendication 1, **caractérisé en ce que** :

   - les deux éléments (9.2, 9.3) appartiennent à un même train épicycloïdal.

3. Dispositif selon l'une des revendications 1 à 2, **caractérisé en ce que** :

   - les moyens pour assurer simultanément la liaison se trouvent sur l'arbre d'une des machines électriques.

4. Dispositif selon l'une des revendications 1 à 3, **caractérisé en ce que** :

   - le premier élément (9.2) est relié directement à l'arbre (7) de roues.

5. Dispositif selon l'une des revendications 1 à 4, **caractérisé en ce que** :

   - le dispositif de commutation comporte un crabot (23) monobloc comportant une longueur (24) de navette plus grande que la distance qui sépare un premier engrenage (12.1) relié à un des deux éléments (9.2) d'un deuxième engrenage (12.2) relié à l'autre élément (9.3).

6. Dispositif selon l'une des revendications 1 à 5, **caractérisé en ce que** :

   - le dispositif de commutation comporte un crabot réalisé en deux parties (30, 31), une première partie (30) étant destinée à entrer en coopération avec un premier engrenage (12.1) relié à un des deux éléments (9.2), une deuxième partie (31) étant destinée à entrer en coopération avec un deuxième engrenage (12.2) relié à l'autre élément (9.3).

7. Dispositif selon la revendication 6, **caractérisé en ce que** :

   - la première et la deuxième partie (30, 31) se déplacent indépendamment l'une de l'autre sur une distance supérieure à celle qui sépare le premier du deuxième engrenage (12.1, 12.2).

8. Dispositif selon l'une des revendications 1 à 7, **caractérisé en ce que** :

   - le crabot (23) comporte une languette (40) et / ou des dents (40.1) destinées à coopérer avec une rainure (42) et / ou des dents réalisées dans une périphérie de trous des engrenages (12.1, 12.2).

9. Dispositif selon l'une des revendications 1 à 8, **caractérisé en ce qu'**il comporte un dispositif (10) de pilotage commandant les deux machines (4.1, 4.2) et le dispositif (23.1) de commutation, pour compenser un couple appliqué sur l'arbre (8) de l'autre machine (4.1) lors d'une commutation.

10. Dispositif selon l'une des revendications 1 à 9, **caractérisé en ce qu'**il comporte un système (18) de stockage relié aux machines (4.1, 4.2) par l'intermédiaire d'un bus (15) de tension continue.

11. Procédé d'utilisation d'un dispositif (1) de transmission de puissance entre un moteur (2) thermique et des roues (3) d'un véhicule automobile, ce dispositif (1) de transmission de puissance comportant une première et une deuxième machine électrique (4.1, 4.2), un dispositif (23.1) de commutation, et un ensemble (90) mécanique reliant entre eux un arbre (6) du moteur, un arbre (7) des roues (3), et des arbres (8, 11) des machines électriques (4.1, 4.2), cet ensemble (90) mécanique comportant au moins deux trains épicycloïdaux (5, 9), chaque train comportant plusieurs éléments mutuellement engrenés avec des arbres d'engrenage, dans lequel,

   - dans un premier mode de fonctionnement, on relie un arbre (11) d'une machine (4.2) à un élément (9.2) de l'ensemble (90) mécanique, à l'aide d'un crabot (23) du dispositif (23.1) de commutation, et
   - dans un deuxième mode de fonctionnement, on relie l'arbre (11) de cette même machine (4.2) à un autre élément (9.3) de l'ensemble mécanique à l'aide du crabot (23),
   - lors du passage d'un mode à un autre, pour compenser, on relie simultanément l'arbre (11) de la machine (4.2) avec les deux éléments (9.2, 9.3) de l'ensemble mécanique auxquels cet arbre (11) est susceptible d'être relié, à l'aide du crabot.

   **caractérisé en ce que** :

   - les trains (5, 9) épicycloïdaux possèdent des raisons (R1, R2) choisies de manière que lorsque les vitesses de rotation des deux éléments (9.2, 9.3) sont égales, la vitesse de rotation de l'arbre (8) de l'autre machine (4.1) est nulle.
   - si la machine (4.2) ne fonctionne pas en moteur pendant le passage d'un mode à un autre, on applique un couple sur l'arbre (8) de l'autre machine (4.1) pour compenser la présence d'un couple parasite sur cet arbre (8).

**12.** Procédé selon la revendication 13, **caractérisé en ce que** lors du passage d'un mode à un autre,

- le crabot (23) est en appui sur un engrenage (12.1) relié à un des éléments (9.2) puis sur un deuxième engrenage (12.2) relié à l'autre élément (9.3).

**13.** Procédé selon l'une des revendications 12 à 14, **caractérisé en ce que** pour compenser le couple,

- on émet des signaux (O1a-O1f) de commande sur des transistors d'un onduleur (13) relié à l'autre machine (4.1) pendant une durée augmentée.

**14.** Procédé selon l'une des revendications 12 à 15, **caractérisé en ce que** pour compenser,

- on applique un couple sur l'arbre (8) de l'autre machine (4.1) correspondant à un couple appliqué sur l'arbre (11) de la machine (4.2) multiplié par un coefficient G connu.

**Claims**

**1.** Power transmission device (1) between a heat engine (2) and wheels (3) of a motor vehicle, this device (1) comprising:

- a first and a second electrical machine (4.1, 4.2), and
- a mechanical assembly (90) connecting with each other a shaft (6) of the engine (2), a shaft (7) of the wheels (3), and shafts (8, 11) of the electrical machines (4.1, 4.2), this mechanical assembly (90) comprising

- at least two epicycloidal gear trains (5, 9), each epicycloidal gear train comprising several elements mutually engaged with gear shafts, and
- at least one switching deice (23.1) ensuring, by displacement, a selective connection of a shaft of one of the electrical machines (4.1, 4.2) to a first element (9.2) in a first operating mode or to a second element (9.3) of the mechanical assembly (90) in a second operating mode,

- the switching device (23.1) comprising means (23, 28) to ensure simultaneously a connecting between, on the one hand, the shaft which is connected selectively to the first or to the second element, and on the other hand this first and this second element (9.2, 9.3), **characterized in that**:

- the epicycloidal gear trains (5, 9) have gear ratios (R1, R2) selected so that when the rotation speeds of the two elements (9.2, 9.3) are equal, the rotation speed of the shaft (8) of the other machine (4.1) is zero,

- the simultaneous connection is realized during a switching between the two operating modes.

**2.** Device according to Claim 1, **characterized in that**:

- the two elements (9.2, 9.3) belong to the same epicycloidal gear train.

**3.** Device according to one of Claims 1 to 2, **characterized in that**:

- the means for ensuring the connection simultaneously are situated on the shaft of one of the electrical machines.

**4.** Device according to one of Claims 1 to 3, **characterized in that**:

- the first element (9.2) is connected directly to the shaft (7) of the wheels.

**5.** Device according to one of Claims 1 to 4, **characterized in that**:

- the switching device comprises a single-block sliding clutch (23) comprising a shuttle length (24) greater than the distance which separates a first gear (12.1) connected to one of the elements (9.2) from a second gear (12.2) connected to the other element (9.3).

**6.** Device according to one of Claims 1 to 5, **characterized in that**:

- the switching device comprises a sliding clutch made in two parts (30, 31), a first part (30) being intended to enter into cooperation with a first gear (12.1) connected to one of the two elements (9.2), a second part (31) being intended to enter into cooperation with a second gear (12.2) connected to the other element (9.3).

**7.** Device according to Claim 6, **characterized in that**:

- the first and the second parts (30, 31) move independently of each other over a distance greater than that which separates the first gear from the second gear (12.1, 12.2).

**8.** Device according to one of Claims 1 to 7, **characterized in that**:

- the sliding clutch (23) comprises a tongue (40) and/or teeth (40.1) intended to cooperate with a groove (42) and/or teeth formed in a periphery of holes of the gears (12.1, 12.2).

**9.** Device according to one of Claims 1 to 8, **characterized in that** it comprises a driving device (10) controlling the two machines (4.1, 4.2) and the switching device (23.1), to compensate a torque applied to the shaft (8) of the other machine (4.1) during a switching.

**10.** Device according to one of Claims 1 to 9, **characterized in that** it comprises a storage system (18) connected to the machines (4.1, 4.2) via a DC bus (15).

**11.** Method of using a power transmission device (1) between a heat engine (2) and wheels (3) of a motor vehicle, this power transmission device (1) comprising a first and a second electrical machine (4.1, 4.2), a switching device (23.1), and a mechanical assembly (90) connecting with each other a shaft (6) of the engine, a shaft (7) of the wheels (3), and shafts (8, 11) of the electrical machines (4.1, 4.2), this mechanical assembly (90) comprising at least two epicycloidal gear trains (5, 9), each gear train comprising several elements mutually meshing with gear shafts, in which,

- in a first operating mode, a shaft (11) of a machine (4.2) is connected to an element (9.2) of the mechanical assembly (90), with the aid of a sliding clutch (23) of the switching device (23.1), and
- in a second operating mode, the shaft (11) of this same machine (4.2) is connected to another element (9.3) of the mechanical assembly with the aid of the sliding clutch (23),
- during the passage from one mode to another, to compensate, simultaneously the shaft (11) of the machine (4.2) is connected with the two elements (9.2, 9.3) of the mechanical assembly to which this shaft (11) is capable of being connected, with the aid of the sliding clutch, **characterized in that**:

- the epicycloidal gear trains (5, 9) have gear ratios (R1, R2) selected so that when the rotation speeds of the two elements (9.2, 9.3) are equal, the rotation speed of the shaft (8) of the other machine (4.1) is zero,
- if the machine (4.2) does not operate as a motor during the passage from one mode to another, a torque is applied to the shaft (8) of the other machine (4.1) to compensate the presence of a parasitic torque on this shaft (8).

**12.** Method according to Claim 11, **characterized in that** during the passage from one mode to another,

- the sliding clutch (23) is supported on a gear (12.1) connected to one of the elements (9.2) then on a second gear (12.2) connected to the other element (9.3).

**13.** Method according to one of Claims 11 to 12, **characterized in that**, to compensate the torque,

- control signals (O1a-O1f) are emitted on transistors of an inverter (13) connected to the other machine (4.1) for an increased duration.

**14.** Method according to one of Claims 11 to 13, **characterized in that**, to compensate,

- a torque is applied on the shaft (8) of the other machine (4.1) corresponding to a torque applied to the shaft (11) of the machine (4.2) multiplied by a known coefficient G.

**Patentansprüche**

**1.** Vorrichtung (1) zum Übertragen von Leistung zwischen einem Verbrennungsmotor (2) und Rädern (3) eines Kraftfahrzeugs, wobei diese Vorrichtung (1) Folgendes aufweist:

- eine erste und eine zweite Elektromaschine (4.1, 4.2), und
- eine mechanische Einheit (90), die untereinander eine Welle (6) des Motors (2), eine Welle (7) der Räder (3) und Wellen (8, 11) der Elektromaschinen (4.1, 4.2) verbindet, wobei diese mechanische Einheit (90) Folgendes aufweist

- mindestens zwei Planetengetriebe (5, 9), wobei jedes Planetengetriebe mehrere Elemente aufweist, die mit Eingriffswellen gegenseitig eingreifen, und
- mindestens eine Vorrichtung (23.1) zum Umschalten, die durch Verlagerung eine selektive Verbindung einer Welle einer der Elektromaschinen (4.1, 4.2) mit einem ersten Element (9.2) in einer ersten Betriebsart oder mit einem zweiten Element (9.3) der mechanischen Einheit (90) in einer zweiten Betriebsart sicherstellt,

- wobei die Umschaltvorrichtung (23.1) Mittel (23, 28) aufweist, um gleichzeitig eine Verbindung einerseits zwischen der Welle, die selektiv mit dem ersten oder mit dem zweiten Element verbunden ist, und andererseits diesem ersten und zweiten Element (9.2, 9.3) sicherzustellen, **dadurch gekennzeichnet, dass**:

- die Planetengetriebe (5, 9) Verhältnisse (R1, R2) aufweisen, die derart ausgewählt sind, dass die Drehzahl der Welle (8) der anderen Elektromaschine (4.1) gleich null ist, wenn die Drehzahlen dieser zwei Elemente (9.2, 9.3) gleich sind,

- die gleichzeitige Verbindung während einer Umschaltung zwischen den zwei Betriebsarten ausgeführt wird.

2. Vorrichtung nach Anspruch 1, **dadurch gekennzeichnet, dass**

- die zwei Elemente (9.2, 9.3) zu einem gleichen Planetengetriebe gehören.

3. Vorrichtung nach einem der Ansprüche 1 bis 2, **dadurch gekennzeichnet, dass**:

- sich die Mittel zum Sicherstellen der gleichzeitigen Verbindung auf der Welle einer der Elektromaschinen befinden.

4. Vorrichtung nach einem der Ansprüche 1 bis 3, **dadurch gekennzeichnet, dass**:

- das erste Element (9.2) direkt mit der Welle (7) von Rädern verbunden ist.

5. Vorrichtung nach einem der Ansprüche 1 bis 4, **dadurch gekennzeichnet, dass**:

- die Umschaltvorrichtung eine einteilige Klaue (23) aufweist, die eine Länge (24) des Umschalters aufweist, die größer ist als die Entfernung, die ihn von einem ersten Radgetriebe (12.1), das mit einem der zwei Elemente (9.2) eines zweiten Radgetriebes (12.2) verbunden ist, das mit dem anderen Element (9.3) verbunden ist, trennt.

6. Vorrichtung nach einem der Ansprüche 1 bis 5, **dadurch gekennzeichnet, dass**:

- die Umschaltvorrichtung eine Klaue aufweist, die aus zwei Teilen (30, 31) hergestellt ist, wobei ein erster Teil (30) dazu bestimmt ist, mit einem ersten Radgetriebe (12.1), das mit einem der zwei Elemente (9.2) verbunden ist, zusammenzuwirken, wobei ein zweiter Teil (31) dazu bestimmt ist, mit einem zweiten Radgetriebe (12.2), das mit dem anderen Element (9.3) verbunden ist, zusammenzuwirken.

7. Vorrichtung nach Anspruch 6, **dadurch gekennzeichnet, dass**:

- sich der erste und der zweite Teil (30, 31) unabhängig voneinander über eine Entfernung bewegen, die größer ist als die, die das erste Radgetriebe (12.1) von dem zweiten Radgetriebe (12.2) trennt.

8. Vorrichtung nach einem der Ansprüche 1 bis 7, **dadurch gekennzeichnet, dass**:

- die Klaue (23) eine Zunge (40) und/oder Zähne (40.1) aufweist, die dazu bestimmt sind, mit einer Rille (42) und/oder mit Zähnen zusammenzuwirken, die in einem Umfang von Löchern der Radgetriebe (12.1, 12.2) hergestellt sind.

9. Vorrichtung nach einem der Ansprüche 1 bis 8, **dadurch gekennzeichnet, dass** sie eine Steuervorrichtung (10) aufweist, die die zwei Elektromaschinen (4.1, 4.2) und die Umschaltvorrichtung (23.1) steuert, um ein Moment auszugleichen, das auf die Welle (8) der anderen Elektromaschine (4.1) bei einem Umschalten angelegt wird.

10. Vorrichtung nach einem der Ansprüche 1 bis 9, **dadurch gekennzeichnet, dass** sie ein System (18) zum Lagern aufweist, das mit den Elektromaschinen (4.1, 4.2) über einen Gleichspannungsbus (15) verbunden ist.

11. Verfahren zum Verwenden einer Vorrichtung (1) zum Übertragen von Leistung zwischen einem Verbrennungsmotor (2) und Rädern (3) eines Kraftfahrzeugs, wobei diese Leistungsübertragungsvorrichtung (1) eine erste und eine zweite Elektromaschine (4.1, 4.2), eine Umschaltvorrichtung (23.1) und eine mechanische Einheit (90) aufweist, die untereinander eine Welle (6) des Motors, eine Welle (7) der Räder (3) und Wellen (8, 11) der Elektromaschinen (4.1, 4.2) verbindet, wobei diese mechanische Einheit (90) mindestens zwei Planetengetriebe (5, 9) aufweist, wobei jedes Planetengetriebe mehrere Elemente aufweist, die mit Eingriffswellen eingreifen, bei dem

- man bei einer ersten Betriebsart eine Welle (11) einer Maschine (4.2) mit einem Element (9.2) der mechanischen Einheit (90) mit Hilfe einer Klaue (23) der Umschaltvorrichtung (23.1) verbindet und
- man bei einer zweiten Betriebsart die Welle (11) dieser gleichen Maschine (4.2) mit einem anderen Element (9.3) der mechanischen Einheit mit Hilfe der Klaue (23) verbindet,
- man beim Übergang von einer Betriebsart auf die andere zum Ausgleichen gleichzeitig die Welle (11) der Maschine (4.2) mit den zwei Elementen (9.2, 9.3) der mechanischen Einheit, mit welchen diese Welle (11) verbunden werden kann, mit Hilfe der Klaue (23) verbindet, **dadurch gekennzeichnet, dass**:

- die Planetengetriebe (5, 9) Verhältnisse (R1, R2) aufweisen, die derart ausgewählt sind, dass die Drehzahl der Welle (8) der anderen Maschine (4.1) gleich null ist, wenn die Drehzahlen der zwei Elemente (9.2, 9.3) gleich sind,
- man, wenn die Maschine (4.2) während des Übergangs von einer Betriebsart auf die andere nicht als Antrieb funktioniert, ein Moment auf die Welle (8) der anderen Maschine (4.1) anlegt, um die Gegenwart eines Störmoments auf dieser Welle (8) auszugleichen.

**12.** Verfahren nach Anspruch 11, **dadurch gekennzeichnet, dass** beim Übergang von einer Betriebsart auf die andere

- die Klaue (23) auf einem Radgetriebe (12.1) in Auflage ist, das mit einem der Elemente (9.2) verbunden ist, und dann auf einem zweiten Radgetriebe (12.2), das mit dem anderen Element (9.3) verbunden ist.

**13.** Verfahren nach einem der Ansprüche 11 bis 12, **dadurch gekennzeichnet, dass** man zum Ausgleichen des Moments

- Signale (O1a-O1f) zum Steuern auf Transistoren eines Wechselrichters (13), der mit der anderen Maschine (4.1) verbunden ist, während einer erhöhten Dauer sendet.

**14.** Verfahren nach einem der Ansprüche 11 bis 13, **dadurch gekennzeichnet, dass** man zum Ausgleichen

- ein Moment auf die Welle (8) der anderen Maschine (4.1) anlegt, das einem Moment, das auf die Welle (11) der Maschine (4.2) angelegt wird, multipliziert mit einem bekannten Koeffizienten G entspricht.

**Fig. 1a**

**Fig. 1b**

**Fig. 2a**    ETAT DE LA TECHNIQUE

**Fig. 2b**

**Fig. 2c**

**Fig. 3a**

coupe F-F

**Fig. 3b**

**Fig. 4**

**Fig. 5**

**EP 1 789 722 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2832357 A
- EP 1097830 A